# EUROPEAN PATENT SPECIFICATION

(11) **EP 2 099 648 B1**
(45) Date of publication and mention of the grant of the patent: **29.08.2012**
(21) Application number: 07852107.7
(22) Date of filing: 13.12.2007
(51) Int. Cl.: B60R 9/058, B60R 9/04

(54) **FASTENING DEVICE FOR A LOAD CARRIER AT A VEHICLE**
BEFESTIGUNGSVORRICHTUNG FÜR EINEN LASTTRÄGER AN EINEM FAHRZEUG
DISPOSITIF DE FIXATION POUR PORTE-CHARGE AU NIVEAU D'UN VÉHICULE

(30) Priority: 18.12.2006 SE 0602740
(43) Date of publication of application: 16.09.2009
(73) Proprietor: Thule Sweden AB, 330 33 Hillerstorp (SE)
(72) Inventor: ODIN, Hans, 331 41 Värnamo (SE)
(74) Representative: Valea AB
(86) International application number: PCT/SE2007/001105
(87) International publication number: WO 2008/076037

(56) References cited:
- EP-A1- 0 694 441
- WO-A1-97/32751
- DE-A1- 19 822 111
- DE-A1- 19 947 776
- PATENT ABSTRACTS OF JAPAN & JP 2001 039230 A (CAR MATE MFG) 13 February 2001

## Description

### Technical field

The present invention refer to a fastening device for detachable fixation of a load carrier at a vehicle, comprising a bracket or similar arranged at the roof of the vehicle, which is essentially firmly fixed at the roof, and which having at least an elongated recess, hole or similar for detachable clamping of a load carrier foot or similar, which load carrier foot comprises an axially movable bolt or similar, with a head of the bolt having an essential elongated shape, which is intended to be unobstructed introduced along with said recess, and through a twist across said recess obtain an axial locking of the bolt.

### State of the art

A previously known fastening device for a railing is shown by example in DE 19947776, GB 2 386 591 or JP2005297841. These fastening devices comprise a bracket, which is firmly fastened to the vehicle and to the railing.

### Problem

The problem with fastening devices of known kind is that the load carriers loosen or that the roof of the vehicle being essentially deformed at heavy braking of a vehicle having a huge load on the load carriers, which result in unnecessary cost for the owner of the vehicle at minor accidents.

### Solution

The purpose with the present invention is to achieve a fastening device for load carrier of a vehicle, which securely holds the load carriers at normal use, but which admit a certain deformation of the load carriers at an accident.

The present invention overcomes the above mentioned disadvantages with a load carrier of introductory mentioned kind which is characterised in that the elongated recess or the hole having arched longitudinal side edges, whereby said head is admitted to slide along the arched side edges at a movement of the bolt in direction along with the side edges.

### Brief description of the figures

A load carrier foot according to the present invention shall hereafter be described with reference to the enclosed figures, in which:
figure 1 is a schematic view of a load carrier foot with a fastening device according to the present invention,
figure 2 is a schematic side view of said fastening device and a bolt for clamping of the load carrier foot, shown in a first mounting position,
figure 3 is a schematic side view of said fastening device and a bolt for clamping of the load carrier foot, shown in a second mounting position, and
figure 4 is a schematic view in perspective of said fastening device.

### Preferred embodiment

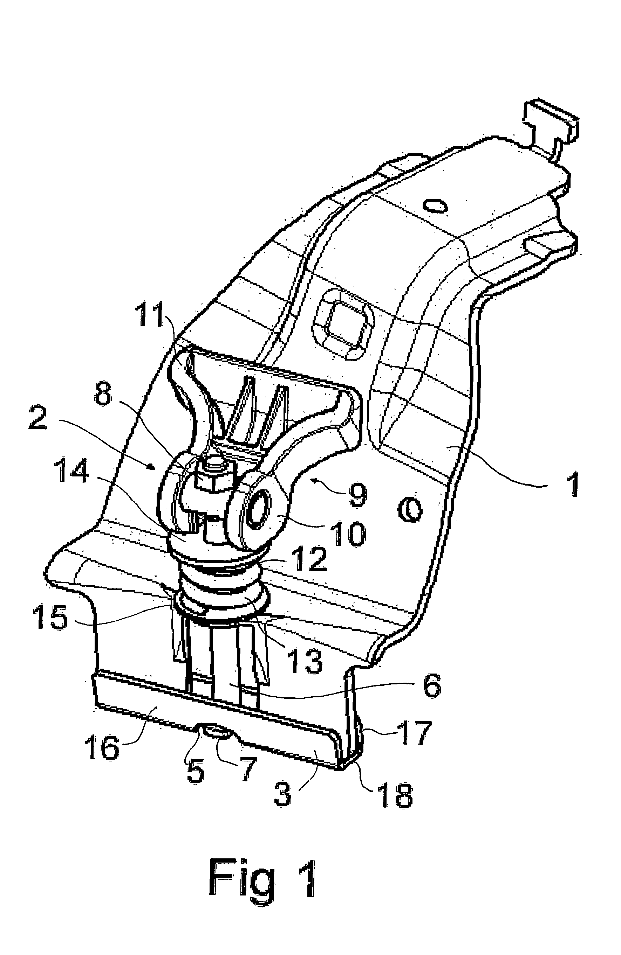

In figure 1 a load carrier foot 1 is shown, having a fastening device 2 for a load carrier (not shown), comprising a bracket 3 or similar arranged at the roof of the vehicle (not shown), which with at least one fastening means (not shown), is firmly fastened at the roof through screwing, riveting, welding or similar. The fastening means can comprise at least one bolt or similar, which extends through a threaded hole (not shown) in the roof of the vehicle. The bracket 3 is suitable made of steel and preferably of high-strength steel. The bracket 3 is in the shown embodiment shaped as a U-shaped girder and having at least an elongated, rectangular recess 5, hole or similar for detachable clamping of the load carrier foot 1 or similar. The load carrier foot 1 comprises an axially movable bolt 6 or similar, with a head 7 arranged at the lower end of the bolt, having an essentially elongated, rectangular shape, which is intended to be introduced unobstructed along with said recess 5 and through a twist across said recess 5 achieve an axial locking of the bolt 6 at the bracket 3, and a nut 8 arranged at the upper end of the bolt for firmly fastening the bolt 6 by screwing at the load carrier foot 1. Preferably, the fastening device 2 comprises a quick coupling 9 in the shape of an eccentric 10, with a handle 11, whereby said eccentric 10 being brought in engagement between the load carrier foot 1 and the nut 8. To achieve a suitable clamping force and to withstand existing tolerances the quick coupling 9 comprises a spacer 12 and a spring 13 arranged between an upper washer 14 and a lower washer 15, and being placed around the bolt 6 between the eccentric 10 and the load carrier foot 1. At assembly of the load carrier foot 1 it is placed between the side walls 16 and 17 of the bracket 3, and abuts against the base 18 of the bracket 3.

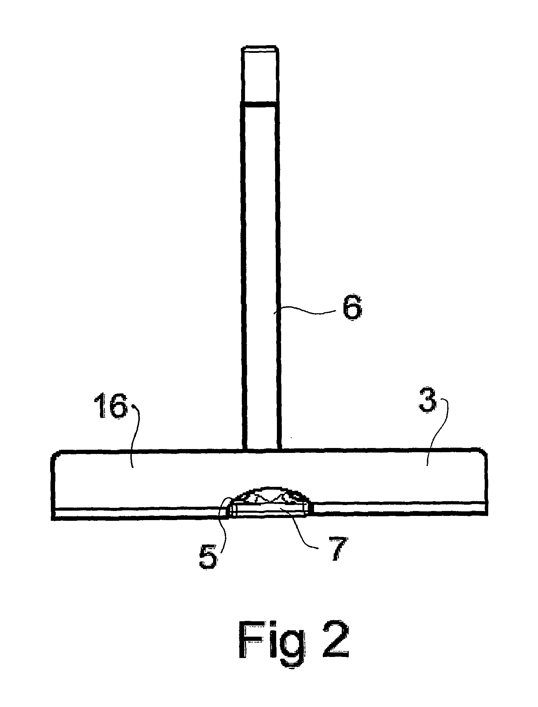

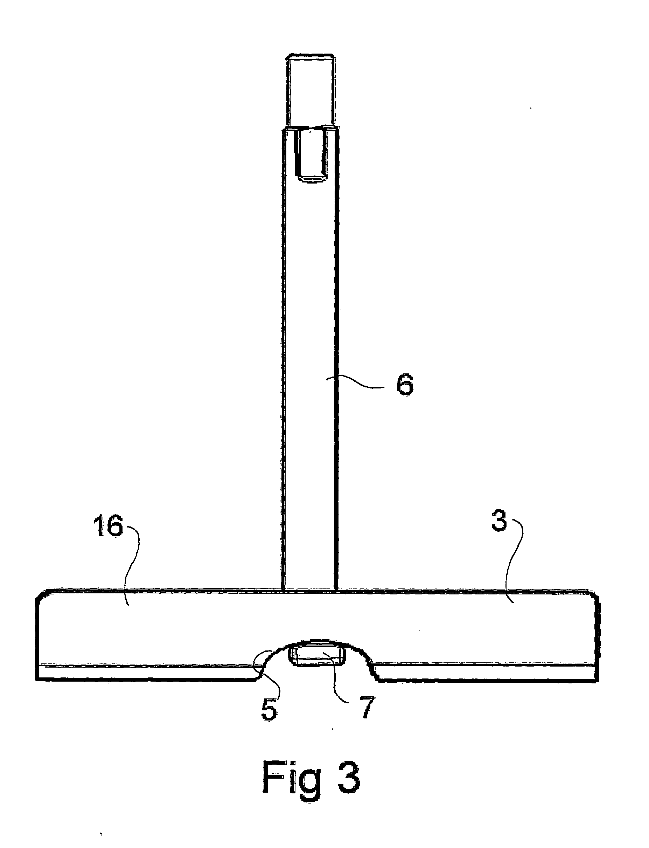

In figure 2 and 3 the bolt 6 is shown with the head 7 and the bracket 3 is shown with the recess 5. In figure 2 a first assembly position is shown where the bolt 6 has been moved through the recess 5, and in figure 3 a second assembly position being shown where the bolt 6 has been twisted, compared to figure 2 to a second assembly position, whereupon the bolt 6 is tightened in such way that the head 7 in the recess 5 abuts against at least one of the side walls 16 of the brackets.

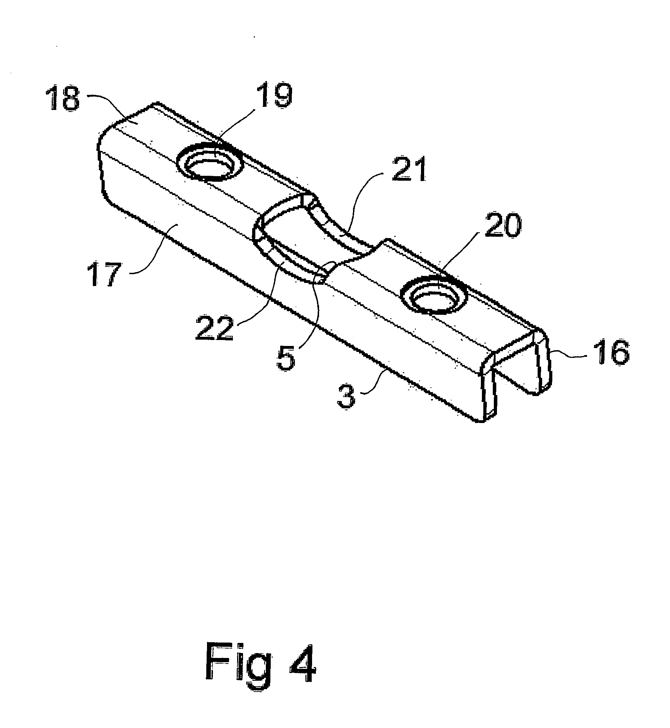

In figure 4 the bracket 3 is clearly shown and comprise a U-shaped girder of bent steel plate with the recess 5 arranged in the base 18 of the bracket 3. Preferably, the recess is shaped by punching of the material, but naturally the recess can also be shaped through mechanically working of the material, as drilling, milling, grinding or similar.

The side walls 16 and 17 of the brackets 3 may be oblique in relation to the base 18 to be adapted to the roof of the vehicle. In the shown embodiment the bracket 3 comprises two holes 19 and 20 for clamping of the bracket 3 at the roof of the vehicle by aid of bolts (not shown), which also being provided with sealing (not shown) in shape of O-rings or similar. The lower edge (not shown) of the load carrier foot 1 having recesses (not shown) for said bolts.

An important part of the invention is that the recess 5 having arched longitudinal side edges 21 and 22, whereby said head 7 being admitted to slide along the arched side edges 21 and 22 at a movement of the bolt 6 in direction along with the side edges 21 and 22. To promote this movement a bending at the side edges 21 and 22 of the recess can be made.

Such movement will normally only occur at a crash with the vehicle where the load carrier foot 1 being deformed and slide forward along the bracket 3. At such movement the bolts 6 are likewise turned forward and the head 7 slides along with the arched side edges 21 and 22, whereby the head 7 being prevented from shearing off from the bolt 6 compared with fixations of known kind.

A further important part of the invention is that the base 18 is removed in the area of the recess 5, even if some result of the arched side edges 21 and 22 is also obtained in case that the base 18 being keep and the openings only are formed through the both side walls 16 and 17. When removing the base 18 a more suitable distribution of the force between the bracket 3 and fixation in the roof of the vehicle in relation to the head 7 of the bolts 6 at a possible crash with the vehicle. To reach further advantages the head 7 of the bolts 6 may have arched abutting surfaces towards the side edges 21 and 22.

Within the frame of the present invention the head of the bolts may also be in the shape of an angle or a hook. Naturally, the shape of the brackets 3 may also be altered within the frame of the present patent claims, for example as an L-shaped girder.

## Claims

1. Fastening device for detachable fixation of a load carrier on a vehicle, comprising a bracket (3) or similar arranged at the roof of the vehicle, which is substantially firmly fixer at the roof, and which exhibits at least an elongated recess (5), hole or similar, for detachable clamping of a load carrier foot (1) or similar, which load carrier foot (1) comprises an axially movable bolt (6) or similar, said bolt (6) having a head (7) with a substantially elongated shape, which is arranged to be freely introduced axially into said recess (5), and via rotation of said bolt (6), move said head (7) with respect to said recess (5) thereby lock said bolt (6) from axial movement,
**characterized in**
**that** the elongated recess (5), or the hole, comprises arched longitudinally side edges (21, 22), whereby said head (7) of said bolt (6) is permitted to slide along the arched side edges (21, 22) during movement of said bolt (6) in direction along with said side edges (21, 22).

2. Fastening device according claim 1, **characterized in that** said bracket (3) is a substantially elongated U-shaped bracket (3) with the recess (5) arranged at the base (18) of the bracket (3).

3. Fastening device according claim 1 or 2, **characterized in that** the recess (5) is shaped by punching the material.

4. Fastening device according claim 3, **characterized in that** the recess (5) extends through the base (18) of the bracket (3).

5. Fastening device according to claim 4, **characterized in that** said bracket in formed by bending the side edges (21, 22) of the recess (5).

6. Fastening device according any of the claims 2 to 5, **characterized in that** said head (7) of the bolt (6) has an arched surface for abutting against the side edges (21, 22) after assembly.

7. Fastening device according any of the claims 2 to 6, **characterized in** the head (7) of the bolt (6) has the form of an angle or a hook.

## Patentansprüche

1. Befestigungsvorrichtung zur lösbaren Fixierung eines Lastträgers an einem Fahrzeug, umfassend eine Klammer (3) oder etwas ähnliches, die am Dach des Fahrzeugs angeordnet ist, die im wesentlichen fest am Dach angebracht ist, und die mindestens eine längliche Aushöhlung (5), ein Loch oder ähnliches aufweist, zum lösbaren Anklammern eines Lastträgerfußes (1) oder ähnlichem, wobei der Lastträgerfuß (1) einen axial beweglichen Bolzen (6) oder ähnliches umfasst, wobei der Bolzen (6) einen Kopf (7) mit einer im wesentlichen länglichen Form hat, der so ausgelegt ist, dass er in Achsenrichtung frei in die Aushöhlung (5) eingeführt werden kann, und dass der Kopf (7) durch Drehung des Bolzens (6) in Bezug auf die Aushöhlung (5) bewegt werden kann und auf diese Weise der Bolzen (6) gegen axial gerichtete Bewegung blockiert wird,
**dadurch gekennzeichnet, dass**
die längliche Aushöhlung (5), oder das Loch längsgerichtete, gebogene Seitenränder (21, 22) umfasst, wodurch es dem Kopf (7) des Bolzens (6) ermöglicht wird, entlang der gebogenen Seitenränder (21, 22) zu gleiten, während sich der Bolzen (6) in Richtung entlang der Seitenränder (21, 22) bewegt.

2. Befestigungsvorrichtung nach Anspruch 1, **dadurch gekennzeichnet, dass** die Klammer (3) eine deutlich verlängerte U-förmige Klammer (3) ist, wobei die Aushöhlung (5) an der Basis (18) der Klammer (3) angebracht ist.

3. Befestigungsvorrichtung nach Anspruch 1 oder 2, **dadurch gekennzeichnet, dass** die Aushöhlung (5) durch Stanzen des Materials geformt wird.

4. Befestigungsvorrichtung nach Anspruch 3, **dadurch gekennzeichnet, dass** sich die Aushöhlung (5) durch die Basis (18) der Klammer (3) erstreckt.

5. Befestigungsvorrichtung nach Anspruch 4, **dadurch gekennzeichnet, dass** die Klammer durch Biegen der Seitenränder (21, 22) der Aushöhlung (5) geformt wird.

6. Befestigungsvorrichtung nach einem der Ansprüche 2 bis 5, **dadurch gekennzeichnet, dass** der Kopf (7) des Bolzens (6) eine gebogene Oberfläche aufweist, die nach Montage an den Seitenrändern (21, 22) anliegt.

7. Befestigungsvorrichtung nach einem der Ansprüche 2 bis 6, **dadurch gekennzeichnet, dass** der Kopf (7) des Bolzens (6) die Form eines Winkels oder eins Hakens aufweist.

## Revendications

1. Dispositif de fixation pour une fixation amovible d'un porte-charge sur un véhicule, comprenant un support (3) ou analogue disposé sur le toit du véhicule, qui est fermement fixé au toit, et qui présente au moins un évidement allongé (5), un trou ou analogue, pour le serrage amovible d'un pied de porte-charge (1) ou analogue, ledit pied de porte-charge (1) comprenant un boulon mobile axialement (6) ou analogue, ledit boulon (6) ayant une tête (7) ayant une forme sensiblement allongée, qui est conçue pour être introduite librement axialement dans ledit évidement (5), et grâce à la rotation dudit boulon (6), déplace ladite tête (7) par rapport audit évidement (5), ce qui empêche un mouvement axial dudit boulon (6),
**caractérisé en ce que**
l'évidement allongé (5), ou le trou, comprend des bords latéraux en arc de cercle longitudinalement (21, 22), ainsi ladite tête (7) dudit boulon (6) peut coulisser le long des bords latéraux en arc de cercle (21, 22) durant le mouvement dudit boulon (6) dans une direction suivant lesdits bords latéraux (21,22).

2. Dispositif de fixation selon la revendication 1, **caractérisé en ce que** ledit support (3) est un support (3) sensiblement en U allongé, dont l'évidement (5) est disposé à la base (18) du support (3).

3. Dispositif de fixation selon la revendication 1 ou la revendication 2, **caractérisé en ce que** l'évidement (5) est formé par estampage du matériau.

4. Dispositif de fixation selon la revendication 3, **caractérisé en ce que** l'évidement (5) s'étend à travers la base (18) du support (3).

5. Dispositif de fixation selon la revendication 4, **caractérisé en ce que** ledit support est formé en pliant les bords latéraux (21, 22) de l'évidement (5).

6. Dispositif de fixation selon l'une quelconque des revendications 2 à 5, **caractérisé en ce que** ladite tête (7) dudit boulon (6) a une surface en arc de cercle destinée à venir en butée contre les bords latéraux (21, 22) après l'assemblage.

7. Dispositif de fixation selon l'une quelconque des revendications 2 à 6, **caractérisé en ce que** la tête (7) du boulon (6) a la forme d'un angle ou d'un crochet.
